# EUROPEAN PATENT APPLICATION

(11) **EP 2 314 446 A2**
(43) Date of publication of application: **27.04.2011**
(21) Application number: 10251832.1
(22) Date of filing: 21.10.2010
(51) Int. Cl.: B30B 9/12

(54) **Screw press**

(30) Priority: 23.10.2009 GB 0918618
(71) Applicant: M. & N. Electrical and mechanical services Limited, Portland DT5 2JS (GB)
(72) Inventor: MacFarlan, Gordon Matthew, Portland DT5 1HW (GB); Light, Simon, James, Weymouth DT2 9RZ (GB)
(74) Representative: Harkness, Katherine Joy

(57) **Abstract**

Apparatus **10** for sewage treatment comprises a screen **14** immersed in a liquid-solid mixture **16** to be treated and releasably secured to a conduit **22** inclined upwards from the mixture **16.** Liquid components pass through the screen **14** whilst solid components are caught and scraped off by a scraper **30** in the form of a helical first screw which passes them into the lower end of the conduit **22.** A conveyor **24** in the form of a helical second screw carries these solid components up through the conduit **22** and deposits them by way of a vent **40** into a container (not shown) for disposal. The scraper **30** and conveyor **24** have respective shafts **32** and **28** joined at **33** for coaxial rotation together, driven by a motor **26.** The assembly of screen **14** and scraper **30** is detachable for repair and replacement. A bearing **34** at the end of the shaft **32** supports the scraper **30** during its rotation, to avoid off-axis displacement and possible damage.

## Description

This invention concerns separating apparatus, which is to say apparatus for separating solid material from a mixture of liquid and solid material, particularly but not exclusively in plant for treating sewage, storm water and the like.

Sewage, and other kinds of waste water, may contain a wide variety of solid material which needs to be separated out for disposal. In one common form of separator, the waste water flows through an open basket having a screen which traps the solid material, and the solid material is scraped off the screen and carried away by means of an upwardly inclined helical screw driven by a motor at its upper end.

A problem with this form of separator is that the scraping part of the helical screw quickly becomes worn and the scraping function is impaired.

It is an object of the present invention to allow the scraping function to be maintained.

Thus according to the invention there is provided separating apparatus for separating solid material from a mixture of liquid and solid material, which apparatus comprises:
a helical first screw having one end supported in a first bearing to be rotatable in the mixture about an axis and having its other end free, said first screw comprising a helical flight extending about and along said axis;
a helical second screw coaxial with the first screw and having one end supported in a second bearing to be rotatable about said axis and having its other end free, said second screw comprising a helical flight extending about and along said axis;
a screen extending partially around and engaging the first screw in the mixture and formed to trap the solid material and pass the liquid material, the screen and the first screw being relatively configured and arranged so that when the first screw rotates it scrapes the trapped material off the screen and carries it axially towards the second screw; and
a conduit extending around the second screw, the conduit and the second screw being relatively configured and arranged so that when the second screw rotates it carries the scraped-off material away from the first screw;
characterised in that the free ends of the first and second screws are releasably connected together for rotation together about said axis.

The first screw acts principally as a scraper. Its scraping action against the screen means that the first screw tends to wear, but because it is releasable from the second screw - which acts principally as a conveyor - it can be readily and economically replaced or repaired when it becomes worn.

Preferably the screen and the conduit are releasably secured together at proximal ends. With this arrangement the screen and the first screw together comprise a unit that can be bolted on to the end of the unit comprising the conduit and the second screw.

Preferably, also, said first bearing is at the distal end of the screen and said second bearing is at the distal end of the conduit. With this arrangement the assembly of first screw and second screw is supported at both ends so it will not move off centre and cause excess wear or other damage to the screen.

The second screw may be located in the conduit by means of a lock-nut at its distal end.

A motor may be connected to the second screw at the distal end of the conduit to rotate the second screw and thereby the first screw.

The second screw and the conduit may be relatively formed to compress the scraped-off material to extract residual liquid therefrom, and the conduit may have a perforated inner wall providing a drain for the extracted residual liquid.

In a preferred arrangement the screen, which may be of perforated metal and be formed as a trough open generally upwards, is circumjacent the outer circumference of the helical flight of the first screw, which may carry a brush engaging the screen. The first screw may also have an open inner circumference. In addition, the conduit may slope upward from its proximal to its distal end.

Other features of the invention will be apparent from the following description, which is made by way of example only and with reference to the accompanying schematic drawing, in which -
*Figure 1* is a schematic illustration of separating apparatus according to the invention in side elevation;
*Figure 2* is a schematic plan view of the apparatus of *Figure 1**;*
*Figure 3* is a schematic cross section as at A-A of *Figure 2**;* and
*Figure 4* is a schematic cross section as at B-B of *Figure 2**.*

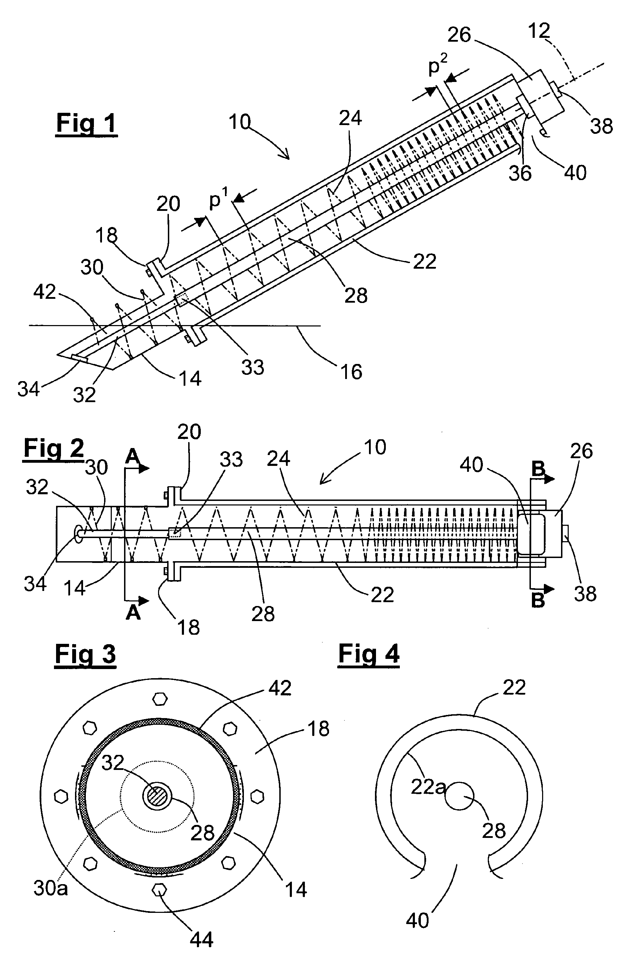

Referring first to *Figures 1* and *2*, separating apparatus indicated generally at **10** is upwardly inclined along an axis **12.** Its lower end comprises a screen **14** which in use is immersed in sewage, waste water or mixture of solid and liquid components to be separated, indicated at **16.** The screen **14** is made of stainless steel and is perforated and in the form of a trough open generally upwards.

The screen **14** has a flange **18** at one end (to the right as seen in *Figures 1* and *2*) secured to a proximal flange **20** of a tubular conduit **22** extending along the axis **12.** Extending axially through the conduit **22** is a helical screw conveyor **24** rotatably driven about the axis **12** by an electric motor **26** at its upper end connected to the shaft **28** of the screw conveyor **24.** At the lower end of the screw conveyor **24** is a helically formed scraper **30** rotatable about the axis **12** and having an axially extending shaft **32** keyed at one end to the shaft **28** for rotation therewith, as indicated at **33.** As indicated in *Figure 3*, the scraper **30** has an open inner circumference **30a** along part of the length of the shaft **32,** which supports the scraper **30** at its ends.

The other end of the shaft **32** is supported by a bearing **34,** and the distal end of the shaft **28** is supported in a bearing **36** at the upper end of the conduit **22.** By this means the assembly of shafts **32** and **28** is supported at opposite ends for controlled rotation about the axis **12.** The shaft assembly is held in place by a lock nut **38** at its upper end.

The operation of the apparatus **10** is as follows. With the lower end of the apparatus **10** immersed in the mixture 16 of solid and liquid components to be separated, the motor **26** is driven to drive the scraper **30** and the screw conveyor **24** about the axis **12.** The liquid component of the mixture **16** passes through the perforations of the screen **14** whilst the solid components are caught. The scraper **30** has scraping engagement with the arcuate inner face of the screen **14** and thereby, as it rotates, it scrapes the solid components from the screen. The helical form of the scraper **30** then serves to carry the scraped-off solid components upwards and into the proximal end of the conduit **22.** From this point the solid components are picked up by the screw conveyor **24** and carried axially upwards through the conduit **22** until they are deposited into a container (not shown) by way of a downwardly facing opening **40** in the conduit **22.** The solid components extracted from the mixture **16** may then be removed as and when appropriate.

As can be seen from *Figures 1* and *2*, the screw conveyor has an axial pitch which reduces along its length, from p¹ at its lower end to p² at is upper end. By this means the solid components are progressively compressed as they are carried through the conduit **22** so as to squeeze out as much of the liquid component as possible. The conduit **22** has a perforated inner wall **22a** (*Figure 4*) whereby the squeezed-out liquid passes through and drops back down into the mixture **16.** Thus the mixture **16** becomes substantially all liquid through the action of the separating apparatus **10.**

As indicated at **42,** the helically formed scraper **30** has a brush extending around and along its outer circumference for engagement with the screen **14.** As and when the scraper **30** becomes worn over time the assembly of scraper **30** and screen **14** may be detached from the conduit **22** by releasing the bolts **44** and separating the shaft **32** from the shaft **28,** and then the brush **42** may be replaced. If the wear should be more pronounced, the scraper **30** as a whole may be replaced. The screen **14** may also be replaced, of course. It should be noted that the bearing **34** ensures that the scraper **30** is properly supported, even after some wear, so it does not move off the axis **12** to cause damage to the screen **14.**

Various possible modifications and adaptations may be made to the invention as described. For instance, the bolts **42** may be so arranged as to allow the screen to be movably adjustable relative to the scraper. This arrangement allows wear of the scraper to be taken up, thereby extending its life. Other variations will be apparent to those skilled in the science.

## Claims

1. Separating apparatus for separating solid material from a mixture of liquid and solid material, which apparatus comprises:
a helical first screw (30) having one end supported in a first bearing (34) to be rotatable in the mixture (16) about an axis (12) and having its other end free, said first screw (30) comprising a helical flight extending about and along said axis (12);
a helical second screw (24) coaxial with the first screw (30) and having one end supported in a second bearing (36) to be rotatable about said axis (12) and having its other end free, said second screw (24) comprising a helical flight extending about and along said axis (12);
a screen (14) extending partially around and engaging the first screw (30) in the mixture (16) and formed to trap the solid material and pass the liquid material, the screen (14) and the first screw (30) being relatively configured and arranged so that when the first screw (30) rotates it scrapes the trapped material off the screen (14) and carries it axially towards the second screw (24); and
a conduit (22) extending around the second screw (24), the conduit (22) and the second screw (24) being relatively configured and arranged so that when the second screw (24) rotates it carries the scraped-off material away from the first screw (30);
**characterised in that** the free ends of the first and second screws (30, 24) are releasably connected together (33) for rotation together about said axis (12).

2. Separating apparatus as claimed in claim **1 characterised in that** the screen (14) and the conduit (22) are releasably secured together at proximal ends.

3. Separating apparatus as claimed in claim **2 characterised in that** said first bearing (34) is at the distal end of the screen (14) and said second bearing (36) is at the distal end of the conduit (22).

4. Separating apparatus as claimed in claim **3 characterised in that** said second screw (24) is located in the conduit (22) by means of a lock-nut (38) at its distal end.

5. Separating apparatus as claimed in claim **3** or claim **4 characterised in that** a motor (26) is connected to the second screw (24) at the distal end of the conduit (22) to rotate the second screw (24) and thereby the first screw (30).

6. Separating apparatus as claimed in any preceding claim **characterised in that** the second screw (24) and the conduit (22) are relatively formed to compress the scraped-off material to extract residual liquid therefrom.

7. Separating apparatus as claimed in claim **6 characterised in that** the conduit (22) has a perforated inner wall (22a) providing a drain for the extracted residual liquid.

8. Separating apparatus as claimed in any preceding claim **characterised in that** the screen (14) is movably adjustable transversely of said axis (12).

9. Separating apparatus as claimed in any preceding claim **characterised in that** the screen (14) is circumjacent the outer circumference of the helical flight of the first screw (30).

10. Separating apparatus as claimed in claim **9 characterised in that** the first screw (30) has an open inner circumference (30a).

11. Separating apparatus as claimed in claim **9** or claim **10 characterised in that** the screen (14) is formed as a trough open generally upwards.

12. Separating apparatus as claimed claim **3 characterised in that** the screen (14) is formed of perforated metal.

13. Separating apparatus as claimed in claim **9 characterised in that** the outer circumference of the first screw (32) carries a brush (42) engaging the screen (14).

14. Separating apparatus as claimed in any preceding claim **characterised in that** the conduit (22) slopes upward from its proximal to its distal end.
